# EUROPÄISCHE PATENTANMELDUNG

(11) **EP 3 978 342 A1**
(43) Veröffentlichungstag der Anmeldung: **06.04.2022**
(21) Anmeldenummer: 21193938.4
(22) Anmeldetag: 31.08.2021
(51) Int. Cl.: B62J 43/13, B62J 43/28

(54) **FAHRRADRAHMENROHR**

(30) Priorität: 01.10.2020 DE 202020105635 U
(71) Anmelder: Canyon Bicycles GmbH, 56073 Koblenz (DE)
(72) Erfinder: Thoma, Vincenz, 87538 Obermaiselstein (DE); Klein, Philipp, 56073 Koblenz (DE); Parmeter, Christian, 56068 Koblenz (DE); Schmidt, Patrick, 56068 Koblenz (DE)
(74) Vertreter: dompatent von Kreisler Selting Werner - Partnerschaft von Patent- und Rechtsanwälten mbB

(57) **Zusammenfassung**

Ein Fahrradrahmenrohr, bei dem es sich insbesondere um ein Unterrohr (14) eines Fahrradrahmens handelt, weist eine Batterieöffnung (22) zum Einsetzen oder Entnehmen einer Batterie (32) auf. Im Inneren des Fahrradrahmenrohrs (14) ist ein Halteelement (30) zum Halten der Batterie (32) angeordnet. Das Haltelement (30) ist zumindest teilweise elastisch verformbar, wobei das Halteelement insbesondere zwei Anlageelemente (38) aufweist, die elastisch verformbar ausgebildet sind.

## Beschreibung

Die Erfindung betrifft ein Fahrradrahmenrohr, insbesondere ein Unterrohr eines Fahrradrahmens.

Bei E-Bikes ist es beispielsweise aus DE 10 2016 010 338 und US2020/0062325 bekannt, eine Batterie innerhalb des Unterrohrs anzuordnen. Hierzu weist das Unterrohr an seinem tretlagerseitigen Ende eine in Längsrichtung des Unterrohrs offene Batterieöffnung auf. Durch diese kann die Batterie von unten in Längsrichtung in das Unterrohr eingeschoben werden. Die Fixierung der Batterie im Unterrohr erfolgt gemäß der in US2020/0062325 beschriebenen Ausführungsform dadurch, dass am Batteriegehäuse am oberen Ende der Batterie eine Kappe angeordnet ist. Das obere Ende der Batterie ist in eingeschobenem Zustand in dem in Richtung des Steuerrohrs weisenden Bereich des Unterrohrs angeordnet. Die Kappe liegt an der Innenseite des Unterrohrs an. Insofern ist es erforderlich, dass in dem Anlagebereich die Innenseite des Unterrohrs mit einer engen Toleranz hergestellt ist, um einerseits ein einfaches Einschieben der Batterie zu ermöglichen und andererseits ein spielfreies Halten des oberen Endes der Batterie sicherzustellen. Am tretlagerseitigen Ende ist die Batterie durch Schrauben am Unterrohr fixiert.

Aufgabe der Erfindung ist es, ein Fahrradrahmenrohr, insbesondere ein Unterrohr eines Fahrradrahmens zu schaffen, in dem zuverlässig und auf kostengünstige Weise eine Batterie angeordnet werden kann.

Die Lösung der Aufgabe erfolgt erfindungsgemäß durch ein Fahrradrahmenrohr, insbesondere ein Unterrohr eines Fahrradrahmens mit den Merkmalen des Anspruchs 1.

Das erfindungsgemäße Fahrradrahmenrohr, bei dem es sich insbesondere um ein Unterrohr eines Fahrradrahmens handelt, weist eine Batterieöffnung zum Einsetzen oder Entnehmen einer Batterie auf. Die Batterie kann hierbei ein Batteriegehäuse, mehrere Zellen, eine Steuereinrichtung und dergleichen aufweisen. Im Inneren des erfindungsgemäßen Fahrradrahmenrohrs ist ein Haltelement zum Halten der Batterie angeordnet. Das Halteelement ist zumindest teilweise elastisch verformbar ausgebildet. Durch Vorsehen eines Halteelements an der Innenseite einer Wandung des Fahrradrahmenrohrs, ist es nicht erforderlich das Fahrradrahmenrohr mit einer engen Toleranz herzustellen oder die Innenseite des Fahrradrahmenrohrs zu bearbeiten. Vielmehr erfolgt das Halten der Batterie über das zumindest teilweise elastisch verformbare Halteelement.

Das Halteelement weist hierbei in bevorzugter Ausführungsform eine derartige Elastizität auf, dass es durch das Einschieben des Batteriegehäuses senkrecht zur Batterieachse in montiertem Zustand um 0,5 bis 2,0 mm, insbesondere 0,8 bis 1,5 mm komprimiert ist. Das Komprimieren erfolgt hierbei durch das Einschieben der Batterie, insbesondere von unten in ein Unterrohr von Hand durch einen Benutzer.

Durch die elastische Ausgestaltung zumindest eines Teils des Halteelements wird auf die Batterie eine Vorspann- bzw. Haltekraft ausgeübt.

Gegebenenfalls können im Inneren des Fahrradrahmen zwei einander gegenüberliegende Halteelemente vorgesehen sein. Auch kann das Halteelement derart ausgebildet sein, dass es die Batterie in eingeschobenem Zustand spangenförmig umgibt, bzw. U-förmig ausgebildet ist. Die Batterie bzw. das Batteriegehäuse kann derart ausgebildet sein, dass es auf einer Außenseite eine Ausbuchtung bzw. Anlagefläche aufweist. Hierbei kann es sich beispielsweise um eine konvex gekrümmte Ausbuchtung bzw. konvex gekrümmte Vorsprünge handeln. In eingeschobenem Zustand ist dieser vorzugsweise dem Halteelement gegenüberliegend anordnet.

Vorzugsweise weist das Halteelement ein Anlageelement auf. Dies liegt bei eingesetzter Batterie an einer Außenseite der Batterie an. Durch das Anlageelement des Halteelements erfolgt ein insbesondere vertikales Halten der Batterie. Das Anlageelement ist hierbei derart ausgebildet, dass es als Gleitlager bzw. als schwimmende Lagerung fungiert. Besonders bevorzugt ist es, dass das Anlageelement insbesondere im Wesentlichen senkrecht zu einer Innenwand des Fahrradrahmenrohrs und/oder senkrecht zu einer Außenseite der Batterie elastisch verformbar ist. Hierdurch wird eine Halte- bzw. Vorspannkraft auf die Batterie ausgeübt, so dass ein zuverlässiges Halten der Batterie erfolgt. Hierbei ist es des Weiteren insbesondere bevorzugt, dass das Anlageelement bezogen auf eine Innenwand des Fahrradrahmenrohrs konvex d. h. in Richtung des Inneren des Fahrradrahmenrohrs gekrümmt ausgebildet ist.

Das erfindungsgemäße Haltelement ist in besonders bevorzugter Ausführungsform derart ausgebildet, dass zwischen dem Anlageelement und einer Innenwand das Fahrradrahmenrohrs ein Hohlraum bzw. Zwischenraum ausgebildet ist, um auf einfache Weise eine elastische Verformung zu ermöglichen. Vorzugsweise weist das Halteelement zwei, jeweils mit dem Anlageelement verbundene Abstützelemente auf. Diese dienen zum Abstützen des Anlageelements an der Innenseite des Fahrradrahmenrohrs. Entweder sind die Abstützelemente mit dem Fahrradrahmenrohr verbunden oder liegen an diesem an. Bevorzugt ist es hierbei, dass das Anlageelement insbesondere in Längsrichtung zwischen den beiden Abstützelementen angeordnet ist. Die Längsrichtung ist hierbei die Längsrichtung des Fahrradrahmenrohrs bzw. die Einschubrichtung der Batterie. Bevorzugt ist es ferner, dass das Halteelement mittels eines der beiden Abstützelemente am Fahrradrahmenrohr fixiert ist. Hierbei ist es in bevorzugter Ausführungsform ausreichend, die Befestigung nur über eines der beiden Abstützelemente vorzunehmen.

Vorzugsweise ist zusätzlich eine Batteriesicherung vorgesehen, um ein Verdrehen des Halteelements im Inneren des Fahrradrahmenrohrs zu vermeiden. Dies kann durch Vorsehen eines in eine Öffnung ragenden Pins, durch eine unrunde Ausgestaltung eines in eine komplementäre Ausnehmung eingreifenden Ansatzes oder dergleichen erfolgen.

In bevorzugter Weiterbildung der Erfindung ist dem Halteelement gegenüberliegend ein Führungselement angeordnet. Das Führungselement kann an einer Innenwand des Fahrradrahmenrohrs angeordnet sein, sodass die Batterie in eingeschobenem Zustand zwischen dem Haltelement und dem Führungselement angeordnet ist. Auch kann das Führungselement an einer entsprechenden Außenwand der Batterie angeordnet sein. Dies hat den Vorteil, dass nur ein Element, nämlich das Halteelement im Inneren des Rahmenrohrs fixiert sein muss. Insofern wird das Fahrradrahmenrohr nicht durch eine zweite Befestigung geschwächt.

In besonders bevorzugter Ausführungsform der Erfindung weist das Halteelement ein Fixierelement auf. Das Fixierelement dient zum lateralen Halten der Batterie. Hierzu wirkt das Fixierelement mit der Batterie bzw. dem Batteriegehäuse in eingeschobenem Zustand zusammen. Beispielsweise kann das Halteelement als Fixierelement einen Ansatz wie den stiftförmigen Ansatz aufweisen, der in eine in Längsrichtung verlaufende Nut der Batterie eingreift. Vorzugsweise weist das Fixierelement ein in Längsrichtung des Fahrradrahmenrohrs, bzw. in Einschubrichtung verlaufende Ausnehmung wie eine Nut auf. In eingeschobenem Zustand greift in die Nut ein mit der Batterie verbundener Ansatz ein.

Besonders bevorzugt ist es, dass die Ausnehmung in Längsrichtung trichterartig und/oder der Ansatz in Längsrichtung keilförmig ausgebildet ist. Hierdurch ist das Einführen der Batterie und somit das Einführen des Ansatzes in die Ausnehmung vereinfacht. Besonders bevorzugt ist es, dass die Ausnehmung in dem Anlageelement integriert ist. Insbesondere kann das Anlageelement zwei, insbesondere jeweils konvex gekrümmte Bauteile aufweisen, die derart in einem Abstand zueinander angeordnet sind, dass zwischen den beiden Bauteilen eine Nut oder eine Ausnehmung ausgebildet ist.

Vorzugsweise ist des Halteelement über eine Fixiereinrichtung am Fahrradrahmenrohr fixiert. Die Fixiereinrichtung ist vorzugsweise in einer Öffnung im Fahrradrahmenrohr angeordnet. Hierdurch ist es möglich das Halteelement von außen durch die Öffnung bzw. in der Öffnung zu fixieren.

In besonders bevorzugter Ausführungsform handelt es sich bei der Öffnung um eine Schalteröffnung. In dieser Öffnung ist in bevorzugter Ausführungsform ein mechanischer Schalter angeordnet. Der mechanische Schalter wirkt mit der in die Batterieöffnung eingesetzten Batterie zusammen und dient zum mechanischen Betätigen eines An-/Aus-Schalters der Batterie. Hierzu weist der mechanische Schalter insbesondere ein Schaltelement auf, das zur Betätigung des An-/Aus-Schalters der Batterie dient. In der, insbesondere als Schalteröffnung ausgebildeten Öffnung im Fahrradrahmenrohr ist somit einerseits der mechanische Schalter und andererseits das Halteelement für die Batterie fixiert. Die Öffnung hat somit eine Doppelfunktion und dient zum Halten beider Bauteile. Insbesondere sind die beiden Bauteile als gemeinsame Einheit ausgebildet.

Vorzugsweise weist der mechanische Schalter ein Bedienelement, wie einen Knopf oder dergleichen auf. In besonders bevorzugter Ausführungsform ist das Bedienelement asymmetrisch in der Schalteröffnung angeordnet, um ein einfaches Bedienen zu ermöglichen. Ferner hat dies den Vorteil, dass neben dem Bedienelement das Fixierelement angeordnet werden kann. Insbesondere kann es sich bei dem Fixierelement um eine Schraube handeln, mit der das Halteelement fixiert ist.

Ferner betrifft die Erfindung einen Fahrradrahmen mit einer Motoraufnahme für einen Elektromotor. Der Fahrradrahmen weist mehrere Rahmenrohre, insbesondere ein Oberrohr, ein Unterrohr, ein Sattelrohr und ein Steuerrohr auf. Zumindest eines der Rahmenrohre ist wie vorstehend beschriebenen ausgebildet und weist insbesondere das vorstehend beschriebene Halteelement für die Batterie auf.

Nachfolgend wird die Erfindung anhand einer bevorzugten Ausführungsform unter Bezugnahme auf die anliegenden Zeichnungen näher erläutert.

Es zeigen:

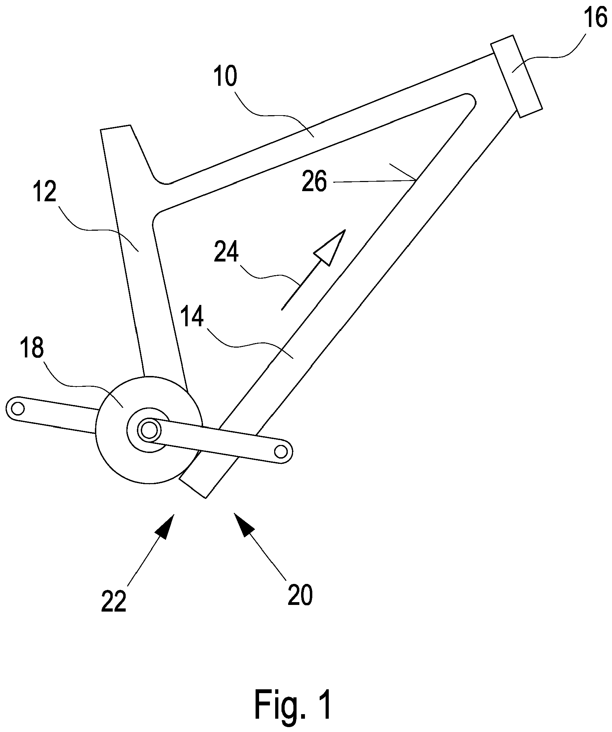

- Figur 1: eine schematische Seitenansicht eines Fahrradrahmens,
- Figur 2: eine schematische perspektivische Draufsicht des Halteelements zusammen mit einer Batterie,
- Figur 3: eine schematische Schnittansicht eines Fahrradrahmenrohrs in Längsrichtung im Bereich des Halteelements und

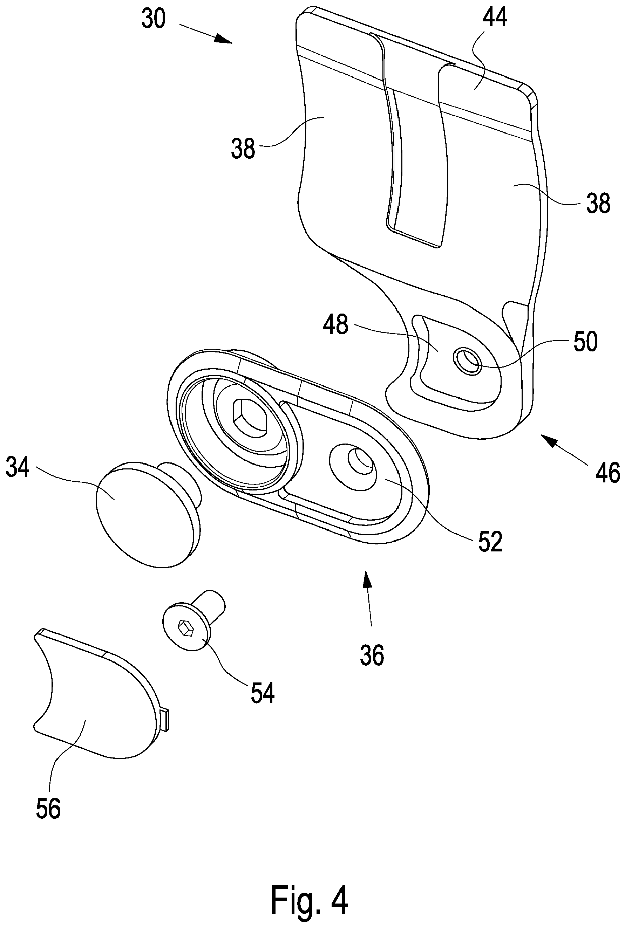

- Figur 4: eine schematische Explosionszeichnung des Halteelements.

Ein Fahrradrahmen weist üblicherweise ein Oberrohr 10, ein mit dem Oberrohr 10 verbundenes Sattelrohr 12, ein Unterrohr 14 sowie ein mit dem Oberrohr 10 und dem Unterrohr 14 verbundenes Steuerrohr 16 auf. Ferner ist ein Tretlager- oder Motorgehäuse 18 vorgesehen, das zur Aufnahme eines Elektromotors des Tretlagers dient. Es sind auch andere Rahmengeometrie bekannt. Im dargestellten Ausführungsbeispiel ist das Unterrohr 14 derart angeordnet, dass ein tretlagerseitiges Ende 20 des Unterrohrs 14 eine Batterieöffnung 22 aufweist. Die Batterieöffnung 22 ist somit bezogen auf eine Längsrichtung 24 des Unterrohrs 14 angeordnet. In die Batterieöffnung 22 kann im dargestellten Ausführungsbeispiel von unten in Längsrichtung 24 eine Batterie in das Unterrohr 14 eingeschoben werden.

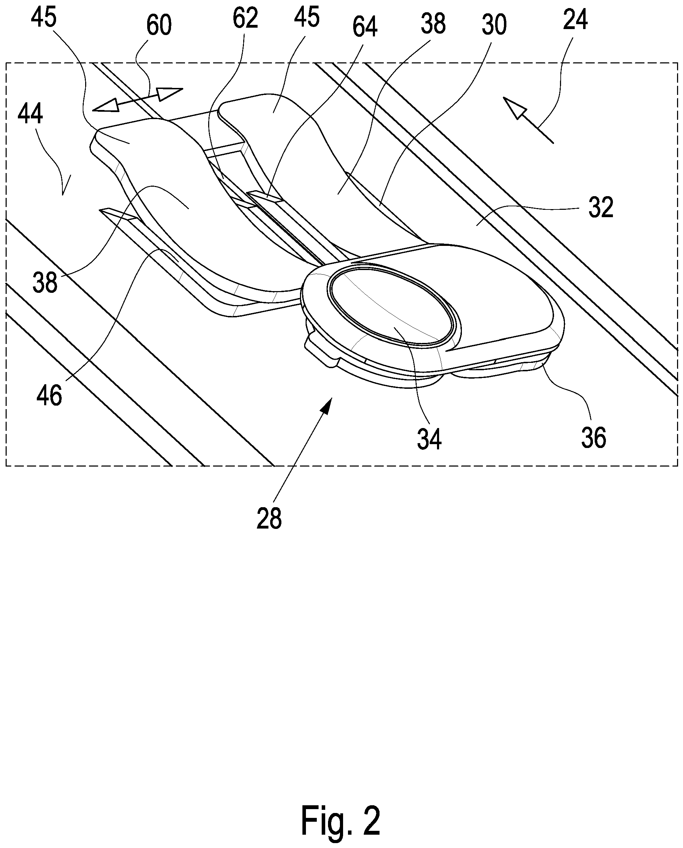

An einer Oberseite 26 des Unterrohrs 14 ist im dargestellten Ausführungsbeispiel, in einem Bereich des Unterrohrs 14, das in Richtung des Steuerrohrs 16 weist, ein mechanischer Schalter angeordnet. In der dargestellten bevorzugten Ausführungsform ist der mechanische Schalter 28 (Figur 2) mit einem Halteelement 30 für eine Batterie 32 kombiniert, bzw. bildet eine Baugruppe. Der Schalter 28 weist ein Bedienelement wie einen Knopf 34 auf, der mechanisch mit einem an der Batterie 40 vorgesehenen An-/Aus-Schalter zusammenwirkt. Dieser ist in Figur 2 unter dem Bedienelement 34 angeordnet. Das Bedienelement 34 ist über ein Fixierelement, bzw. ein Schalter-Halteelement 36 in der, in der dargestellten Ausführungsform im Wesentlichen ovalen Öffnung im Rahmenrohr gehalten.

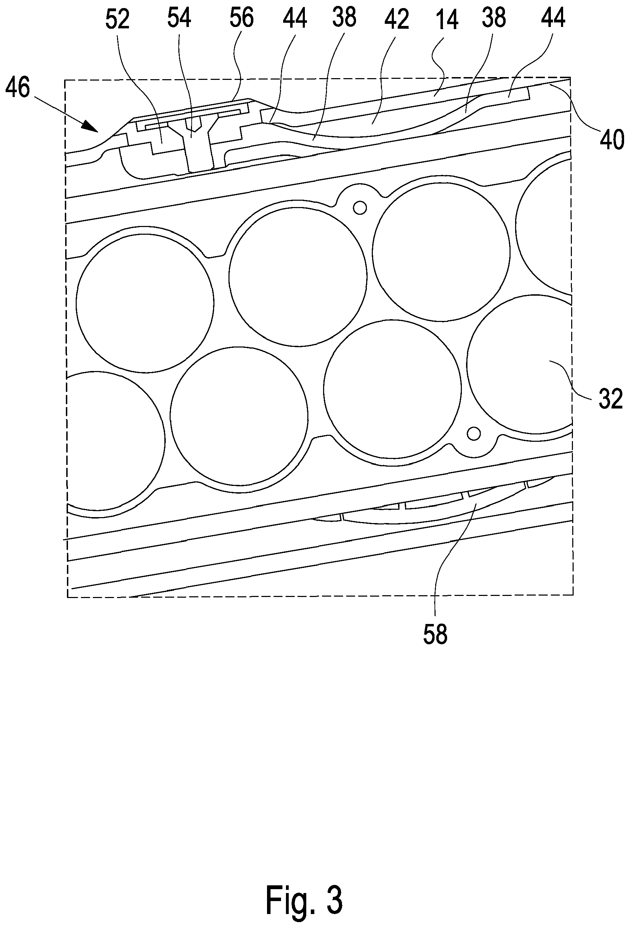

Das Halteelement 30 ist im Inneren eines in Figur 2 nicht dargestellten Rahmenrohrs angeordnet. Das Halteelement 30 weist im dargestellten Ausführungsbeispiel ein aus zwei bogenförmigen Teilen hergestelltes Anlageelement 38 auf. Das Anlageelement 38 ist bezogen auf das Unterrohr 14 (Figur 3) nach innen bzw. konvex gekrümmt. Insbesondere die beiden Anlageelemente 38 sind elastisch ausgebildet. Um eine elastische Verformung beim Einschieben der Batterie 32 zu ermöglichen und eine Druckkraft bzw. Vorspannkraft auf die Batterie 32 auszuüben, ist zwischen den Anlageelementen 38 und einer Innenwand des Fahrradrahmenrohrs 14 ein Hohlraum 42 ausgebildet.

Durch das Vorsehen der Erhöhung 46 ist das Positionieren der Batterie in Längsrichtung erleichtert. Durch die Erhöhung 46 wird in diesem Bereich eine Vorspannung auf das Bauteil 30 erreicht.

Das mindestens eine Anlageelement 38 liegt an einer Außenseite 44 der Batterie 32 an. Um ein Einschieben in Längsrichtung 24 zu erleichtern, weist in eingeschobener Position die Außenseite 44 in dem Bereich, in dem die Anlageelemente 38 anliegen eine Erhöhung 46 auf.

Zur Abstützung an der Innenseite des Unterrohrs 14 weist das Halteelement zwei jeweils mit dem Abstützelement 45 verbundene Abstützelemente 45 auf. Zwischen den beiden Abstützelementen 45 ist das Anlageelement 38 angeordnet. Eines der beiden Anlageelemente 45 ist ferner mit einer Fixiereinrichtung 46 verbunden, bzw. als Fixiereinrichtung 46 ausgebildet. Die Fixiereinrichtung 46 ist als mit den Anlageelementen 38 verbundener Ansatz ausgebildet. Der Ansatz weist eine nicht runde Ausnehmung 48 auf. In dieser ist eine Gewindebohrung 50 vorgesehen. Zur Montage wird das Halteelement 36 in die Öffnung im Rahmenrohr 14 eingesetzt. Ein nach innen weisender Ansatz 52 des Halteelement 36 ragt in die Öffnung 48. Aufgrund der unrunden Ausgestaltung der Öffnung 48 ist ein Verdrehen des Halteelements 30 vermieden. Mithilfe einer Schraube 54 erfolgt ein Fixieren des Halteelements 30 (Figur 3). Die Schraube 54 kann sodann mit einer Abdeckung 56 verschlossen werden.

Im dargestellten Ausführungsbeispiel weist die Batterie 32 ein Führungselement 58 auf. Bei diesem kann es sich um einen konvex gekrümmten Ansatz handeln, der bei eingeschobener Batterie 32 dem Halteelement 36 im Wesentlichen gegenüberliegend angeordnet ist.

Um die Batterie 32 durch das Halteelement 30 auch gegen laterale bzw. seitliche Bewegungen in Richtung eines Pfeils 60 (Figur 2) zu sichern, ist ein Fixierelement vorgesehen. Dieses umfasst eine Nut 62, die im dargestellten Ausführungsbeispiel in dem Halteelement 30 ausgebildet ist. Die Nut 62 wirkt mit einem Ansatz 64, bei dem sich um eine Führungsnase oder dergleichen handeln kann, zusammen. Der Ansatz 64 ist an der Außenseite 44 der Batterie 32 angeordnet und erstreckt sich in Längsrichtung 24.

## Patentansprüche

1. Fahrradrahmenrohr, insbesondere ein Unterrohr, mit
einer Batterieöffnung (22) zum Eingesetzten oder Entnehmen einer Batterie (32) und
einem im Inneren des Fahrradrahmenrohrs (14) angeordneten Halteelement (30) zum Halten der Batterie (32),
wobei das Halteelement (30) zumindest teilweise elastisch verformbar ist.

2. Fahrradrahmenrohr nach Anspruch 1, **dadurch gekennzeichnet, dass** das Halteelement (30) ein in eingesetztem Zustand der Batterie (32) an einer Außenseite (44) der Batterie (32) anliegendes Anlageelement (38) aufweist.

3. Fahrradrahmenrohr nach Anspruch 2, **dadurch gekennzeichnet, dass** das Anlageelement (38) insbesondere im Wesentlichen senkrecht zu einer Innenwand das Fahrradrahmenrohrs (14) und/oder im Wesentlichen senkrecht zu einer Außenseite (44) der Batterie (32) elastisch verformbar ist.

4. Fahrradrahmenrohr nach Anspruch 2 oder 3, **dadurch gekennzeichnet, dass** das Anlageelement (38) bezogen auf eine Innenwand des Fahrradrahmenrohrs (14) konvex ausgebildet ist.

5. Fahrradrahmenrohr nach einem der Ansprüche 2 bis 4, **dadurch gekennzeichnet, dass** zwischen dem Anlageelement (38) und einer Innenwand des Fahrradrahmenrohrs (14) ein Hohlraum (42) ausgebildet ist, um eine elastische Verformung zu ermöglichen.

6. Fahrradrahmenrohr nach einem der Ansprüche 2 bis 5, **dadurch gekennzeichnet, dass** das Halteelement (30) zwei jeweils mit dem Anlageelement (38) verbundene Abstützelemente (45) aufweist, die mit dem Fahrradrahmenrohr (14), insbesondere der Innenseite das Fahrradrahmenrohrs (14) verbunden sind und/oder anliegen.

7. Fahrradrahmenrohr nach einem der Anspruch 6, **dadurch gekennzeichnet, dass** das Anlageelement (38) insbesondere in Längsrichtung (24) zwischen den beiden Abstützelementen (45) angeordnet ist.

8. Fahrradrahmenrohr nach Anspruch 6 oder 7, **dadurch gekennzeichnet, dass** das Halteelement (30) mittels eines der beiden Abstützelemente (45) am Fahrradrahmenrohr (14) fixiert ist.

9. Fahrradrahmenrohr nach einem der Ansprüche 1 bis 8, **dadurch gekennzeichnet, dass** dem Halteelement (30) gegenüberliegend ein Führungselement (58) angeordnet ist, das an einer gegenüberliegenden Innenwand des Fahrradrahmenrohrs und/oder einer Außenseite der Batterie (32) angeordnet ist.

10. Fahrradrahmenrohr nach einem der Ansprüche 1 bis 9, **dadurch gekennzeichnet, dass** das Halteelement (30) ein mit der Batterie (32) in eingeschobenem Zustand zusammenwirkendes Fixierelement (62, 64) zum lateralen Halten der Batterie (32) aufweist.

11. Fahrradrahmenrohr nach Anspruch 10, **dadurch gekennzeichnet, dass** das Fixierelement (62, 64) eine am Halteelement (30) oder der Batterie (32) vorgesehene, sich insbesondere in Längsrichtung (24) erstreckende Ausnehmung (62) aufweist, die mit einem an der Batterie (32) oder dem Halteelement (30) vorgesehenen Ansatz (64) zusammenwirkt.

12. Fahrradrahmenrohr nach Anspruch 10, **dadurch gekennzeichnet, dass** die Ausnehmung (62) in Längsrichtung (24) trichterartig und/oder der Ansatz (64) in Längsrichtung (24) keilförmig ausgebildet ist.

13. Fahrradrahmenrohr nach einem der Ansprüche 1 bis 12, **dadurch gekennzeichnet, dass** das Halteelement (30) über eine Fixiereinrichtung (46, 48, 50, 52, 54), die in einer Öffnung im Fahrradrahmenrohr (14) angeordnet ist, am Fahrradrahmenrohr (14) fixiert ist.

14. Fahrradrahmenrohr nach Anspruch 13, **dadurch gekennzeichnet, dass** in der Öffnung zusätzlich ein Schalter (28) zum An-/ Ausschalten der Batterie (32) angeordnet ist.

15. Fahrradrahmenrohr nach Anspruch 14, **dadurch gekennzeichnet, dass** der Schalter (28) ein Schaltelement (34) aufweist, das bei eingeschobener Batterie (32) mechanisch auf einen an der Batterie (32) vorgesehenen An-/ Ausschalter eingewirkt.

16. Fahrradrahmenrohr nach Anspruch 14 oder 15, **dadurch gekennzeichnet, dass** der Schalter (28) ein an einer Außenseite (26) des Fahrradrahmenrohrs (14) angeordnetes Bedienelement zum Betätigen des Schaltelements aufweist.

17. Fahrradrahmenrohr nach Anspruch 16, **dadurch gekennzeichnet, dass** das Bedienelement bezogen auf eine Mittelebene des Fahrradrahmens seitlich versetzt angeordnet ist.

18. Fahrradrahmen, mit einer Motoraufnahme (18) zur Aufnahme eines Elektromotors und mehreren Rahmenrohren (10, 12, 14, 16), wobei zumindest eines der Rahmenrohre (14) als Fahrradrahmenrohr nach einem der Ansprüche 1 bis 17 ausgebildet ist.
